# EUROPEAN PATENT SPECIFICATION

(11) **EP 1 592 169 B1**
(45) Date of publication and mention of the grant of the patent: **23.03.2011**
(21) Application number: 05251987.3
(22) Date of filing: 30.03.2005
(51) Int. Cl.: G06F 3/12, H04L 12/24, H04L 29/08

(54) **Job management system, job managing apparatus, and their control method**
System und Vorrichtung zur Aufgabenverwaltung und deren Überwachungsverfahren
Système et dispositif d'administration de tâches et leur méthode de contrôle

(30) Priority: 30.03.2004 JP 2004100619
(43) Date of publication of application: 02.11.2005
(73) Proprietor: CANON KABUSHIKI KAISHA, Ohta-ku Tokyo (JP)
(72) Inventor: Horiyama, Jun, Ohta-ku, Tokyo (JP)
(74) Representative: Hitching, Peter Matthew

(56) References cited:
- JP-A- 2001 282 475
- US-A1- 2001 037 407
- US-A1- 2001 053 295
- US-A1- 2002 161 717

## Description

### BACKGROUND OF THE INVENTION

### Field of the Invention

The invention relates to job managing apparatus and method, a job management system, a job managing program, and a storing medium, in which in a network constructed by a client computer, a server computer, and the like, when peripheral devices (network devices) such as printer (printing apparatus), copying apparatus, scanner, multi function printer (MFP) in which they are integrated, and the like connected to the network are used by the user, a job account is executed.

### Related Background Art

In a conventional job account system, for example, there has been used a method whereby in the case where a domain user is synchronized with user information managed by "Active Directory" used from "NT domain" or "Windows (registered trademark) 2000" of "Windows (registered trademark)" as an operating system (OS) made by Microsoft Corporation, that is, the domain user is made to coincide with user information managed by the job account system, by designating a domain or the domain user by using a GUI (Graphical User Interface), the domain user is registered into a job account server (for example, refer to Japanese Patent Application Laid-Open No. 2001-282475).

In the above conventional system, however, after the domain user was once registered into the job account server, when the user information of "NT domain" or "Active Directory" is added or deleted, the addition/deletion of the user information is not reflected to the job account system unless the user information is registered or deleted by the manual operation. Therefore, there is such a problem that the user information managed by "Windows (registered trademark)" as an example of a network management system which manages an access right of the user to the network device and an access right of each user or network device to a network file system and the user information managed by the job account system cannot be synchronized.

The network management system which manages user's authority of the access and operation to the network device on the network manages the user's access right to the network device and the access right of each user or network device to the network file system. For example, in a specific file, an access right which enables the access to be made only by the specific user is managed as a system. According to such a network management system, by executing addition, deletion, change, or the like of the network user, addition, deletion, change, or the like of the access authority to the specific network device can be performed.

There is also such a problem that in the case of using a method whereby the network management system is managed by using the GUI, a domain serving as a network managing group as a unit for managing the network device is designated, and the domain users are registered in a lump into the job account server, since the user information such as "Administrator", "Guest", and the like existing in all domains is registered at random, the user information in which it is not indispensable to inherently manage it in the job account system is registered.

US Application No. 2001/0053295 A1 discloses a print control apparatus which can acquire detailed data about print processing from a client computer on the basis of user information. Authentication information can be requested by a printer driver from the job accounting client application which transmits the authentication information to the job accounting server or printer.

US Application No. 2001/0037407 A1 discloses a system for managing user-specific data communicated over a network. User profile or preference data specific to a user is detected and stored in a server independent of the user's communication device. The next time the user communicates from any device, the stored user profile or preference data is retrieved and used during the communication.

### SUMMARY OF THE INVENTION

According to one aspect, the invention provides a job managing apparatus for managing job information outputted from an information processing apparatus to a peripheral device on the basis of user information for managing jobs, characterized by comprising:
control means for synchronizing user information belonging to another network managing group which has a reliable relation with a network managing group to which a plurality of network devices including said job managing apparatus belong, to the user information for managing the jobs which are managed by said job managing apparatus.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a diagram showing a fundamental construction of a job account system having a job managing apparatus according to an embodiment of the invention;
Fig. 2 is a block diagram showing a fundamental hardware construction of a client computer and a base server computer in Fig. 1;
Fig. 3 is a diagram showing a memory map of a job managing program, related data, and the like stored in an FD or a CD-ROM;
Fig. 4 is a diagram showing a memory map of the job managing program and the like which have been loaded from the FD or the like and enabled to be executed by a CPU;
Fig. 5 is a block diagram showing a fundamental hardware construction of peripheral devices in Fig. 1;
Fig. 6 is a block diagram showing a functional construction of a job information managing module 1031c in Fig. 1;
Fig. 7 is a flowchart showing a process for setting a domain to be synchronized with the user information of the job account system;
Fig. 8 is a diagram showing an example of a GUI for allowing the CPU to execute the process in Fig. 7;
Fig. 9 is a flowchart showing a process for setting the users out of automatic registration targets of domain users;
Fig. 10 is a diagram showing an example of a GUI for allowing the CPU to execute the process in Fig. 9;
Fig. 11 is a flowchart showing a process for setting time to execute the automatic registration of the domain user;
Fig. 12 is a diagram showing an example of a GUI for allowing the CPU to execute the process in Fig. 11;
Fig. 13 is a flowchart showing processes for automatically registering and deleting the domain users; and
Fig. 14 is a diagram for explaining a method of supplying the program and data shown in Fig. 4 to the computer.

### DETAILED DESCRIPTION OF THE PREFERRED EMBODIMENTS

Preferred embodiments of the present invention will now be described in detail in accordance with the accompanying drawings. Relative layouts of component elements, display screens, and the like disclosed in the embodiments do not limit the scope of the invention only to them unless otherwise specified.

### (Job account System)

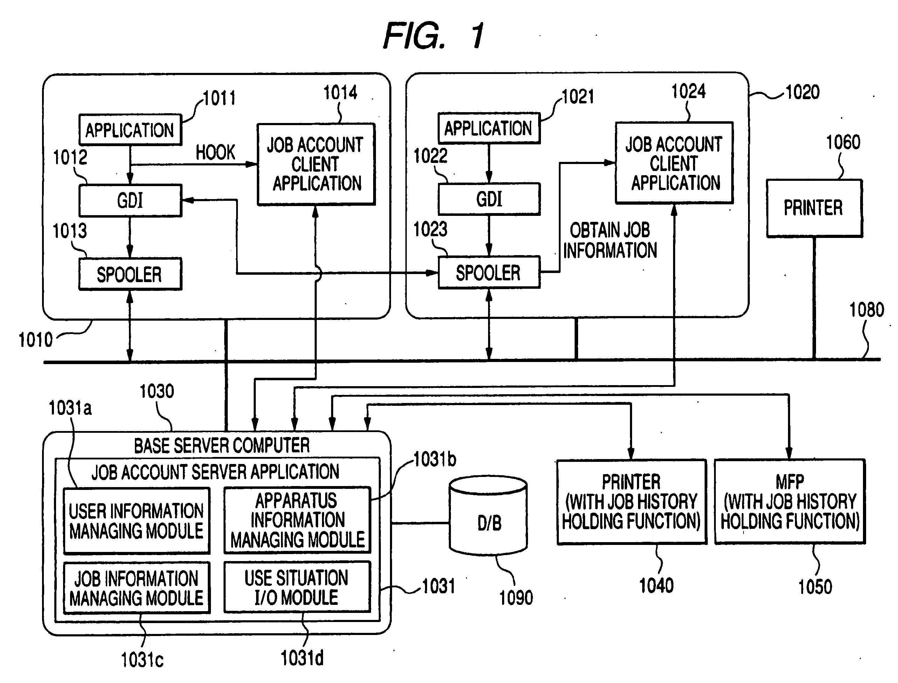

Fig. 1 is a diagram showing a fundamental construction of a job account system having a job managing apparatus according to the embodiment of the invention.

In Fig. 1, the job account system (job management system) is constructed by: client computers 1010 and 1020 as information processing apparatuses; a base server computer 1030 (job managing apparatus); a printer 1040 having a job history holding function for holding a print history (job history); an MFP (Multi Function Printer) 1050 having a printer function, a copying function, a scanner function, and a job history holding function; and a printer 1060 which does not have the job history holding function.

The client computers 1010 and 1020 and the base server computer 1030 are connected to the printers 1040 and 1060 and the MFP 1050 which are network devices (network apparatuses) through a network 1080 so that they can mutually communicate. They can also communicate with other apparatuses (not shown) connected to the network 1080.

As a software construction, the client computer 1010 includes: an application 1011 to form a document; a GDI (Graphics Device Interface) 1012 as a drawing engine of an operating system (hereinafter, referred to as an "OS"); a spooler 1013; and a job account client application 1014.

In the client computers 1010, when the application 1011 calls the GDI 1012, the GDI 1012 forms print data in accordance with an instruction from the application 1011 and transmits the print data to the spooler 1013. The spooler 1013 communicate with the peripheral device (printers 1040 and 1060, MFP 1050) on the network 1080 and transmits the print data if the peripheral device is in the standby mode. When the client computers 1010 functions as a print server, the print data formed by the GDI 1012 is transmitted to the spooler 1023.

The job account client application 1014 monitors (hooks) the calling of the GDI 1012 by the application 1011, obtains job information regarding the printing of the print data formed by the GDI 1012, and stores the job information into a storing device (not shown). The job information includes: information showing the number of print sheets, the number of pages, a print size, a type of sheets which are used, and a print mode such as simplex printing or duplex printing; Nin1 print information (information showing a print mode to print information of N pages onto one surface of the sheet); information (user information) regarding the user who issued a print request; information (color information) regarding the color printing); information (document name) showing a name of a document which is printed; and the like.

The job account client application 1014 periodically transmits the stored job information to a job account server application 1031 in the base server computer 1030.

In a manner similar to the client computer 1010, the client computer 1020 includes: an application 1021; a GDI 1022; a spooler 1023; and a job account client application 1024. The application 1021, the GDI 1022, and the spooler 1023 have the same functions as those of the application 1011, the GDI 1012, and the spooler 1013 mentioned above, respectively.

The job account client application 1024 periodically monitors the spooler 1023. If there is a print job (job information) spooled in the spooler 1023, the job account client application 1024 obtains the print job by using an API (Application Program Interface) and stores it into the storing device (not shown). Specifically speaking, the number of delivery sheets of the print job, the number of pages, and the document name are obtained.

The job account client application 1024 periodically transmits the stored job information to the job account server application 1031 in the base server computer 1030. In the client computer 1020, when the OS has a function of notifying another application of a status change of the spooler 1023, it is not always necessary that the job account client application 1024 periodically monitors the spooler 1023. In this case, the OS notifies the job account client application 1024 that the print job has been spooled in the spooler 1023.

The base server computer 1030 is a job account server to perform the job account when the peripheral device such as printer 1040 or MFP 1050 connected to the network 1080 has been used by the user through the client computer 1010 or the like. If there is a "reliable relation" with a domain (network managing group) in which "Windows (registered trademark) NT Server", "2000 Server", or the like as an OS made by Microsoft Corporation exists, the base server computer 1030 can reflect the user information managed by another network managing group such as "NT Domain" or "Active Directory" to the user information which is managed by the job account system in response to an event which is caused by a request of the job account server in accordance with an input of an obtaining request or the like from the user or a periodic event which is caused by a timer.

As a software construction, the base server computer 1030 has the job account server application 1031. The job account server application 1031 includes: a user information managing module 1031a; an apparatus information managing module 1031b; a job information managing module 1031c; and a use situation input/output (I/O) module 1031d.

The user information managing module 1031a stores the user information into the storing device (not shown) in the base server computer 1030 and manages it. The user information is information to specify (identify) the user who used the peripheral device. For example, the user information includes: a log-in name of the computer of the user who uses the peripheral device (name which is inputted by the user to log-in the computer); and a log-in name of the network (name which is inputted by the user to log-in the network system).

The apparatus information managing module 1031b examines whether or not the peripheral device connected to the network 1080 has a job history holding function, stores apparatus information of the peripheral device having the job history holding function and other apparatuses into the storing device (not shown), and manages it. The apparatus information includes, for example: a print speed of the peripheral device; color information; a network address; and the like.

The job information managing module 1031c receives the job information from the job account client application 1014 and 1024 and stores them into a D/B 1090 as a job history database, which will be explained hereinafter. The job information managing module 1031c requests job history information (job information) from the peripheral device (for example, printer 1040) having the job history holding function and receives the job information from the peripheral device through the use situation I/O module 1031d. The number of times of execution of the series of processes for requesting the job information from the peripheral device and receiving it is not limited to one but they can be periodically executed. It is also possible to construct the system in such a manner that when a residual storage amount of a job history information storing unit (not shown) of the peripheral device is small, the use situation I/O module 1031d is notified of such a fact and the above processes are executed.

The use situation I/O module 1031d obtains information of a use situation of the peripheral device including the job information from the peripheral device having the job history holding function. The use situation I/O module 1031d can allow the peripheral device to print out a use situation report (report showing by which user and to which extent the jobs have been executed) based on the obtained information or display it on a monitor display screen.

The administrator of the job account system in Fig. 1 can allow the use situation I/O module 1031d to output the use situation report and recognize the use situation of the peripheral device. That is, the use situation I/O module 1031d outputs various use situation reports on the basis of the user information, apparatus information, and job information stored in the storing device (not shown). The administrator can designate its output style (output format) into the use situation I/O module 1031d.

The use situation report is also displayed onto, for example, a display unit (not shown) of the base server computer 1030. It is also possible to construct the system in such a manner that output data of the report is transmitted to the client computers 1010 and 1020 and its contents are displayed on display units (not shown) of the client computers 1010 and 1020.

A use amount (the number of sheets and a toner quantity used for the output) of each user and a use time of the peripheral device are outputted onto the use situation report. The use situation is outputted every operating mode (function) such as color printing, duplex printing, or the like of the peripheral device. The use situation is outputted every size or type of the sheet used. Further, since a charge for use of the peripheral device has been set in the apparatus information, a use money amount is outputted every peripheral device or user.

Since a charge for use per operating mode, a charge for use per sheet size, and a charge for use per sheet type have been set in the apparatus information, information showing the user who used the peripheral device, a type of sheets which were used, the operating mode, the peripheral device which was used, the number of print sheets, and a total money amount of the charges for use is outputted.

The administrator can set restriction of the use every function, user, user division, and apparatus which is used through the user information managing module 1031a and the apparatus information managing module 1031b. Items such as charge for use, the number of pages, the number of print sheets, and the like can be given as restriction information which can be set.

The use situation I/O module 1031d monitors the set restriction items (restriction information) and the job information and collates them. If the use situation of the printer 1040 or the like exceeds the restriction value, the module 1031d outputs a message showing such a fact. In this instance, the message can be displayed onto the display unit or informed by E-mail or another communicating means.

The job information managing module 1031c monitors the set restriction items per user and the job history information and collates them. If the use of the apparatus by the specific user exceeds the restriction value, the module 1031c allows the client computer 1010 or the peripheral device to refuse the use of the apparatus by the user. If the use of the apparatus by the specific user exceeds the restriction value, it is also possible to warn the user by displaying a warning onto the display unit or by E-mail or another communicating means.

### (Control construction of the computer)

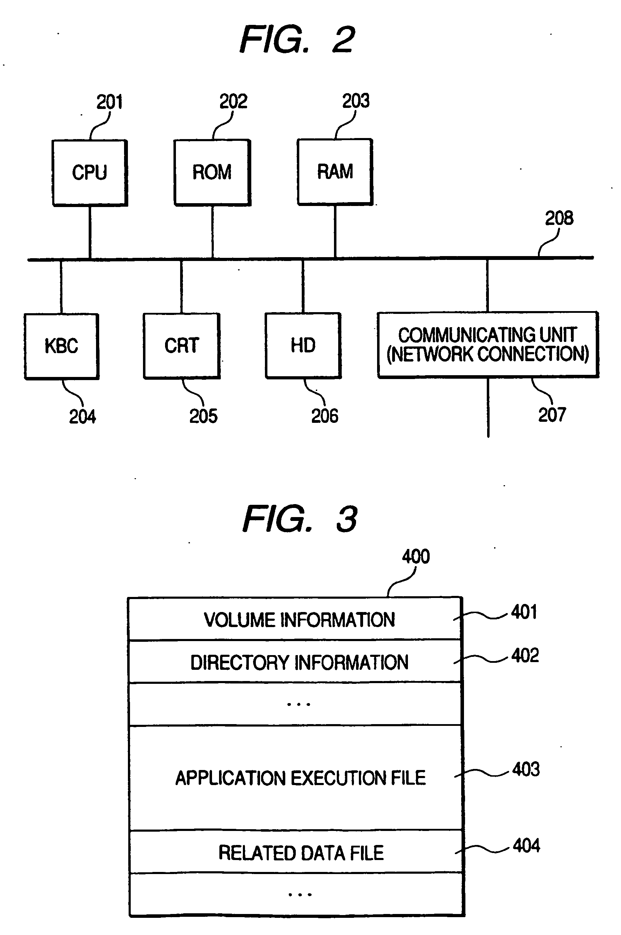

Fig. 2 is a block diagram showing a fundamental hardware construction of the client computer and the base server computer in Fig. 1.

In Fig. 2, each of the client computers 1010 and 1020 and the base server computer 1030 comprises: a CPU (central processing unit) 201; a ROM (read only memory) 202; a RAM (random access memory) 203; a KBC (keyboard control unit) 204; a CRT (display control unit) 205; a an HD (hard disk drive) 206; a communicating unit 207; and a system bus 208.

The CPU 201 controls the whole apparatus and executes an arithmetic operating process and the like. The ROM 202 has a storage area in which information of a system activating program and the like have been stored. The RAM 203 has a data storage area whose use is not limited.

The KBC 204 receives a key input from a keyboard (not shown) annexed to the apparatus and transfers input data to the CPU 201. The CRT 205 controls a display to a display device as a display unit. The HD 206 stores the OS, application programs, a device driver (printer driver), a communication control program, data, and the like. The programs and data are loaded into the RAM 203 and read out therefrom and executed by the CPU 201 as necessary.

A job managing program, which will be explained hereinafter, the user information, the apparatus information, and the job information (job history database) are stored in the HD 206 in the base server computer 1030. The HD 206 can be also replaced by an external storing device such as FD (floppy (registered trademark) disk), SRAM (non-volatile memory), CD-ROM, or the like.

The communicating unit 207 controls the network communication. By the communicating unit 207, the system can communicate with another computer or peripheral device connected to the network 1080. The component elements such as CPU 201, ROM 202, and the like are connected by the system bus 208 and data is transmitted and received via the system bus 208. Although not shown, each of the client computer 1010 and the like has a pointing device such as a mouse or the like as an operation unit.

### (Memory map)

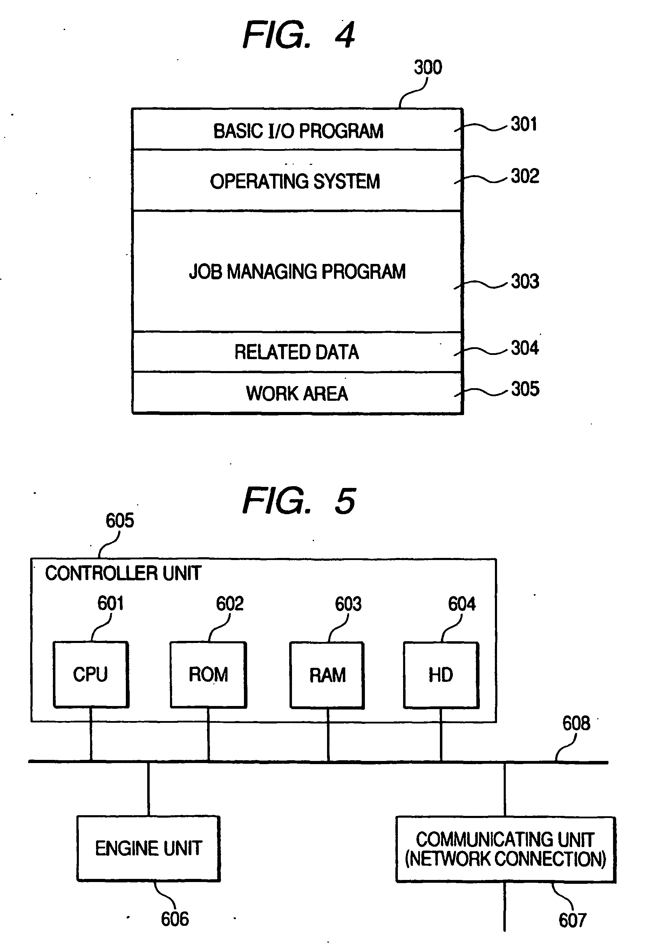

Fig. 3 shows a memory map (storing area) of the job managing program, related data, and the like stored in the foregoing FD or CD-ROM. Fig. 4 shows a memory map of the job managing program and the like which have been loaded from the FD or the like into the RAM 203 and could be executed by the CPU 201.

In Fig. 3, a memory map 400 is constructed by: volume information 401; directory information 402; an application execution file 403 of the job managing program, a related data file 404 of the job account; and the like.

As shown in Fig. 4, a memory map 300 is constructed by: a basic I/O program 301; an operating system 302; a job managing program 303 (a program regarding a user synchronizing process in the embodiment is also included here); related data 304; and a work area 305 which is used when the CPU 201 executes the program such as a job managing program 303 or the like.

### (Control construction of the peripheral device)

Fig. 5 is a block diagram showing a fundamental hardware construction of the peripheral devices in Fig. 1.

In Fig. 5, as a fundamental hardware construction, each of the printers 1040 and 1060 and the MFP 1050 which are the peripheral devices includes: a controller unit 605; an engine unit 606 of the peripheral device; a communicating unit 607; and a system bus 608. The controller unit 605 has a CPU 601, a ROM 602, a RAM 603, and an HD 604 and controls the whole apparatus.

The CPU 601 controls the controller unit 605 and the whole peripheral device and executes an arithmetic operating process and the like. The ROM 602 is a read only memory and has a storage area in which the system activating program and the like have been stored. The RAM 603 is a random access memory and has a data storage area. The HD 604 is a hard disk drive and can be replaced by another non-volatile storing device such as an SRAM or the like.

In each of the printer 1040 and the MFP 1050 each having the job history holding function, the job history information has been stored in the RAM 603 or the HD 604. The operating system, a program for controlling the communication, and a program for controlling the engine unit are loaded into the RAM 603 and read out therefrom and executed by the CPU 601.

Specifically speaking, the engine unit 606 is constructed by a printer engine, a scanner engine, or both of them. The printer engine and the scanner engine execute the printing operation and the image reading operation under control of the controller unit 605. The communicating unit 607 controls the network communication. By the communicating unit 607, the peripheral device can communicate with the client computer 1010 and the base server computer 1030. The component elements such as a CPU 601 and the like are connected by the system bus 608 and data is transmitted and received via the system bus 608.

### (Job managing process)

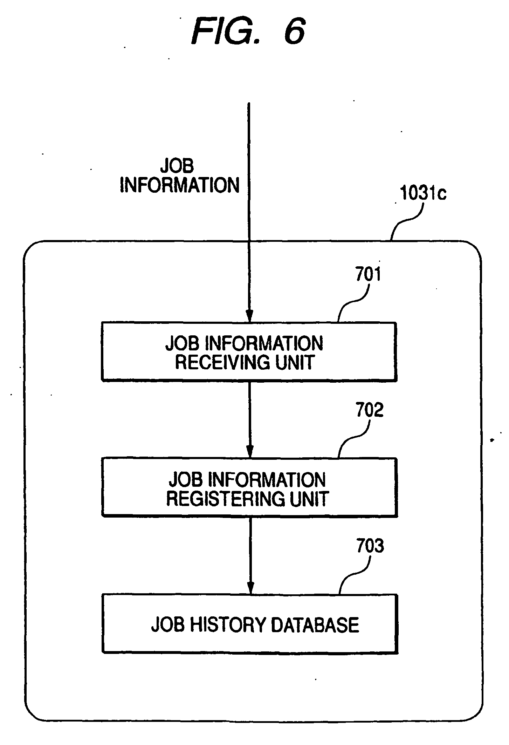

Fig. 6 is a block diagram showing a functional construction of the job information managing module 1031c in Fig. 1.

In Fig. 6, the job information managing module 1031c has a job information receiving unit 701, a job information registering unit 702, and a job history database 703.

The job information receiving unit 701 receives the job information from the job account client application 1014 and 1024 and the printer 1040 and the MFP 1050 each having the job history holding function through the network 1080. The job information registering unit 702 registers the job information received by the job information receiving unit 701 into the job history database 703.

By referring to the data in the job history database 703, when, who, by which peripheral device, and which amount of jobs (the number of pages, the number of delivery sheets, sheet type) have been executed can be discriminated and the detailed job account is executed.

### (Flow of the user synchronizing process)

A setting method of automatically registering the domain user of "Windows (registered trademark)" in the base server computer 1030 will now be described.

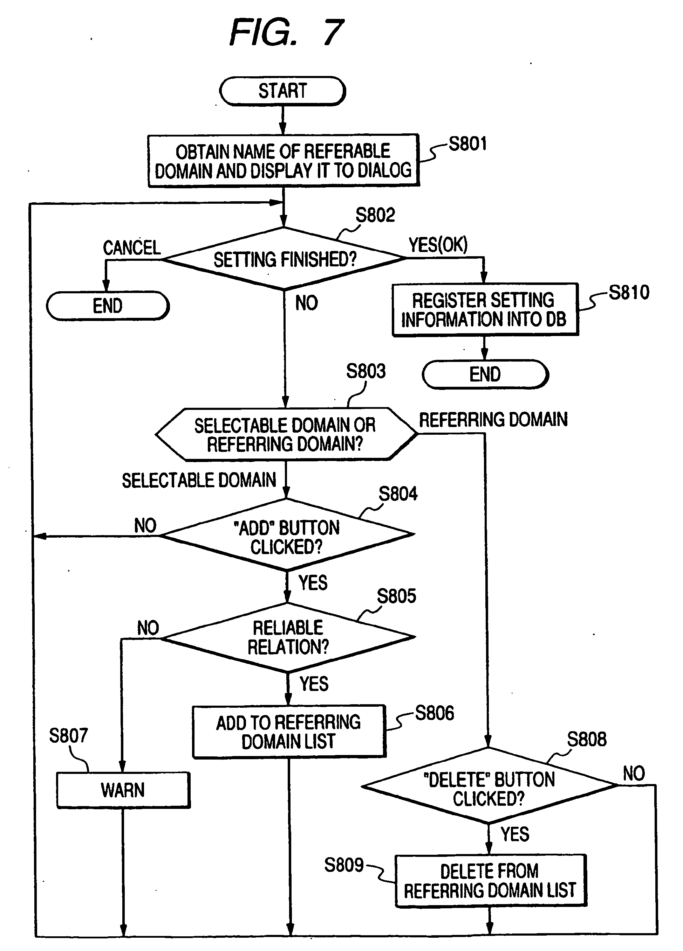

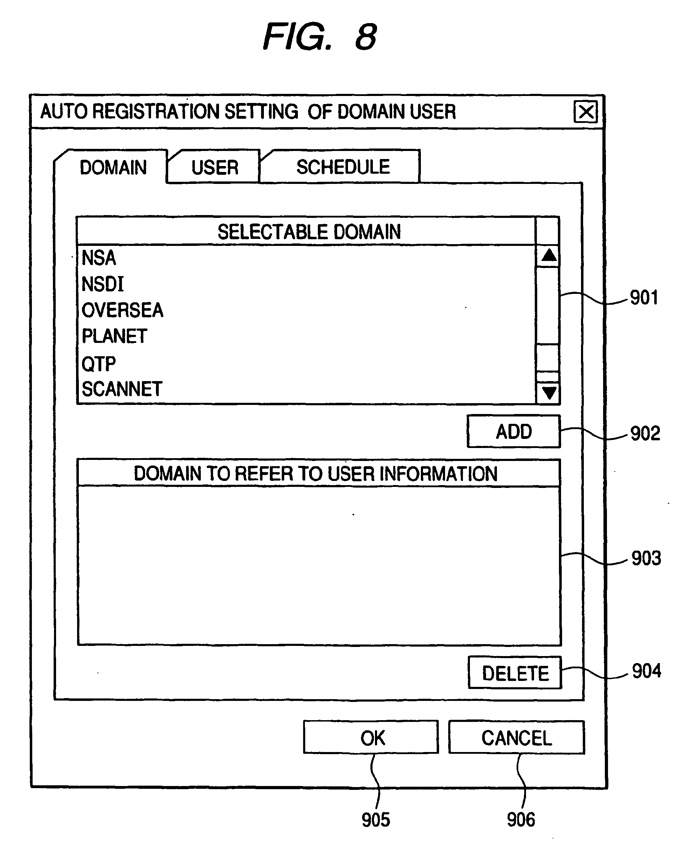

First, a process for setting the domain of "Windows (registered trademark)" (hereinafter, simply referred to as a "domain") to be synchronized with the user information managed by the job account system will be described with reference to Figs. 7 and 8. In principle, it is assumed that the following processes are executed by a method whereby the CPU 201 in the base server computer 1030 reads out program codes stored in the ROM 202 or the like and executes them.

Fig. 7 is a flowchart showing the process for setting the domain to be synchronized with the user information of the job account system. Fig. 8 is a diagram showing an example of a GUI for allowing the CPU to execute the process in Fig. 7. It is assumed that the process in Fig. 7 is executed by the user information managing module 1031a in Fig. 1.

In Fig. 7, the domains which can be referred to by the base server computer 1030 are obtained in step S801. A list of names of the obtained domains is displayed in a dialog. Reference numeral 901 in Fig. 8 shows a state of the dialog. A list of all of the referable domains is displayed here.

In this dialog, various settings can be made by selecting the following tabs from the referable domains: a "domain" tab for setting a domain to refer to the user information managed by a predetermined OS; a "user" tab for setting user information which is not reflected to the user information of the job account system from the user information of the set domain; and a schedule tab for setting a schedule to synchronize the user information of the set domain with the user information of the job account system.

In next step S802, whether or not the setting is finished is discriminated. When the user clicks an OK button 905 shown in Fig. 8 by the pointing device or the like (YES in step S802), step S810 follows. When a "cancel" button 906 is clicked, even if the domain to refer to the user information has been set, this domain is not registered/stored and the processing routine is finished. In the other cases (NO in step S802), step S803 follows.

In step S803, whether the list of the selectable domains or the list of the domains which refer to the user information has been selected is discriminated. The "domain which refers to the user information" denotes the domain to be synchronized with the user information managed by the base server computer 1030. If the domains which refer to the user information have already been selected and registered, the list of the domains is displayed in a region 903 in Fig. 8. The state where the domains to refer to the user information are not registered yet is shown in the diagram.

If it is determined as a result of the discrimination of step S803 that the list of the selectable domains has been selected, that is, if at least one of the domains on the list displayed in a region 901 in Fig. 8 has been selected, step S804 follows. If the list of the domains which refer to the user information has been selected, that is, if at least one of the domains has been selected from the domains displayed as a list in the region 903 in Fig. 8, step S808 follows.

In step S804, whether or not an "add" button 902 has been clicked by the user after the domain to be synchronized with the user information has been selected from the list displayed in 901 in Fig. 8 is discriminated. If it is determined as a result of the discrimination that the "add" button 902 is not clicked (NO in step S804), the processing routine is returned to step S802. If the "add" button 902 has been clicked (YES in step S804), whether or not there is a "reliable relation" between the domain having the domain selected in step S803 and the domain where the base server computer 1030 exists is discriminated in step S805. The process for discriminating the reliable relation is executed, for example, on the basis of a reliable relation discriminating program included in the user information managing module 1031a in Fig. 1.

The reliability between the domains denotes a relation that is established between the two domains. If it is used, the user in one of the two domains can receive the authentication of a domain controller (for example, base server computer 1030) of the other domain. A request for the authentication when the presence or absence of the reliable relation is inquired is made in consideration of a pass of the reliability. The pass of the reliability denotes a reliable relation which is referred to when the authenticating request is transmitted and received between the domains. For example, in the case where the apparatuses A, B, and C exist, the reliable relation can be defined as follows: "Although A relies on B, B does not rely on A" or "if B is relied on from C, A relies on B", or the like.

When the client computer of the user accesses the network device of another domain, it has to inquire of the reliable relation discriminating program about whether or not the domain on the side where it relies on (domain where the network device to be accessed by the user is included) has the reliable relation with the domain on the side where it is relied on (log-on domain of the user). At this time, the reliable relation discriminating program, by referring to its own database for the pass of the reliability between the domain controller of the domain on the side where it relies on and the domain controller of the domain on the side where it is relied on, discriminates the reliable relation and makes a response of a discrimination result to the client computer of the user.

If there is no "reliable relation" as a result of the discrimination of step S805 (NO in step S805), a warning dialog to notify the user of such a fact is displayed in step S807 and the processing routine is returned to step S802. If the "reliable relation" exists (YES in step S805), the domain selected in step S803 is added into the region 903 in Fig. 8 in step S806 and the processing routine is returned to step S802.

Whether or not a "delete" button 904 in Fig. 8 has been clicked after the domain was selected from the domain list displayed in the region 903 in Fig. 8 is discriminated. If the "delete" button 904 is not clicked as a result of the discrimination of step S808 (NO in step S808), the processing routine is returned to step S802. If the "delete" button 904 has been clicked (YES in step S808), the domain selected from the domain list displayed in the region 903 in Fig. 8 in step S803 is deleted in step S809 and the processing routine is returned to step S802.

The user information of the domain having the set domain, that is, the domain displayed on the list in the region 903 in Fig. 8 is registered and stored in the D/B 1090 in step S810 and the processing routine is finished.

By the above processes, the domain to register the user information into the base server computer 1030 can be designated from all of the "Windows (registered trademark)" domains which can be referred to by the job account system and such information can be registered and stored in the database.

A method whereby the user information of the user whose registration is unnecessary for the job account system although it exists in the "Windows (registered trademark)" domains is set will now be described.

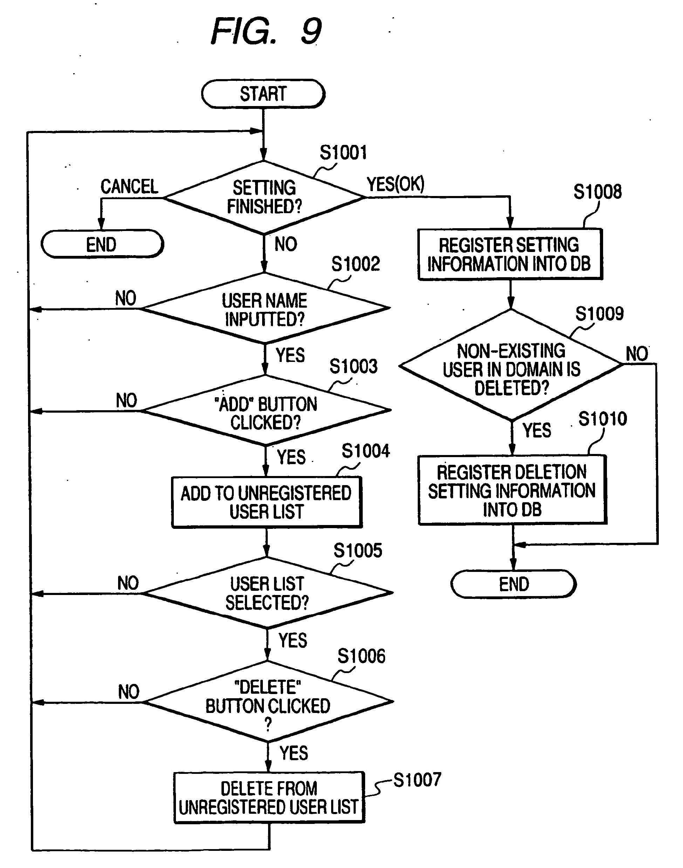

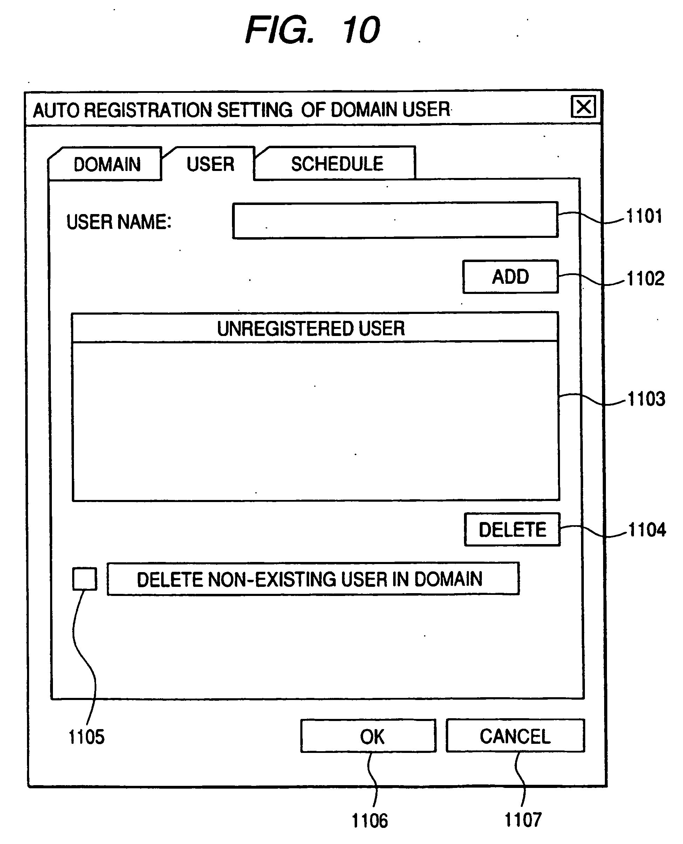

As a specific example of "the user whose registration is unnecessary although it exists in the "Windows (registered trademark)" domains", the users such as "Administrator" and "Guest" existing in any domain, the users to be excluded from the targets of the job account, and the like can be mentioned. By preliminarily setting and registering those users, they can be excluded from the targets of the automatic registration of the domain users. The setting method of the users to be excluded from the automatic registration targets will now be described with reference to Figs. 9 and 10.

Fig. 9 is a flowchart showing the process for setting the users out of the automatic registration targets of the domain users. Fig. 10 is a diagram showing an example of a GUI for allowing the CPU to execute the process in Fig. 9. The process in Fig. 9 is executed by the user information managing module 1031a in Fig. 1.

In Fig. 9, whether or not the setting is finished is discriminated in step S1001. If an OK button 1106 shown in Fig. 10 is clicked by the user (YES in step S1001), step S1008 follows. If a "cancel" button 1107 is clicked, the set information is not registered/stored and the processing routine is finished. In the other cases (NO in step S1001), step S1002 follows.

Whether or not the user which is not registered has been inputted into a region 1101 in Fig. 10 is discriminated in step S1002. "The user which is not registered" indicates the domain user out of the automatic registration targets of the user information into the base server computer 1030. Specifically speaking, there are the users such as "Administrator" and "Guest" and the users to be excluded from the targets of the job account as mentioned above.

If a user name is key-inputted (YES in step S1002) as a result of the discrimination of step S1002, whether or not an "add" button 1102 in Fig. 10 has been clicked is discriminated in step S1003. If the "add" button 1102 has been clicked (YES in step S1003) as a result of the discrimination of step S1003, the user inputted in step S1002 is added to a list of the users which are not registered in a region 1103 in Fig. 10 in step S1004.

In next step S1005, whether or not the list of the users which are not registered has been selected is discriminated. If at least one user is selected from the list of the users which are not registered (YES in step S1005), step S1006 follows and whether or not a "delete" button 1104 shown in Fig. 10 has been clicked is discriminated. If the "delete" button 1104 has been clicked (YES in step S1006) as a result of the discrimination of step S1006, the user selected in step S1005 is deleted from the list of the users which are registered in step S1007 and the processing routine is returned to step S1001.

In step S1008, the information of the users out of the automatic registration targets displayed as a list in the region 1103 in Fig. 10 is registered and stored in the D/B 1090 and the processing routine advances to step S1009. In next step S1009, whether or not a mode to delete the user information of the users which do not exist in the domain from the base server computer 1030 has been set is discriminated. Specifically speaking, whether or not a check box 1105 in Fig. 10 has been marked is discriminated. If the mode to delete the user information has been set (YES in step S1009), information of the deletion/setting is registered and stored in the D/B 1090 (step S1010) and the processing routine is finished.

The domain users of "Windows (registered trademark)" which are not automatically registered into the base server computer 1030 can be set by the above processes and its information can be registered and stored in the database.

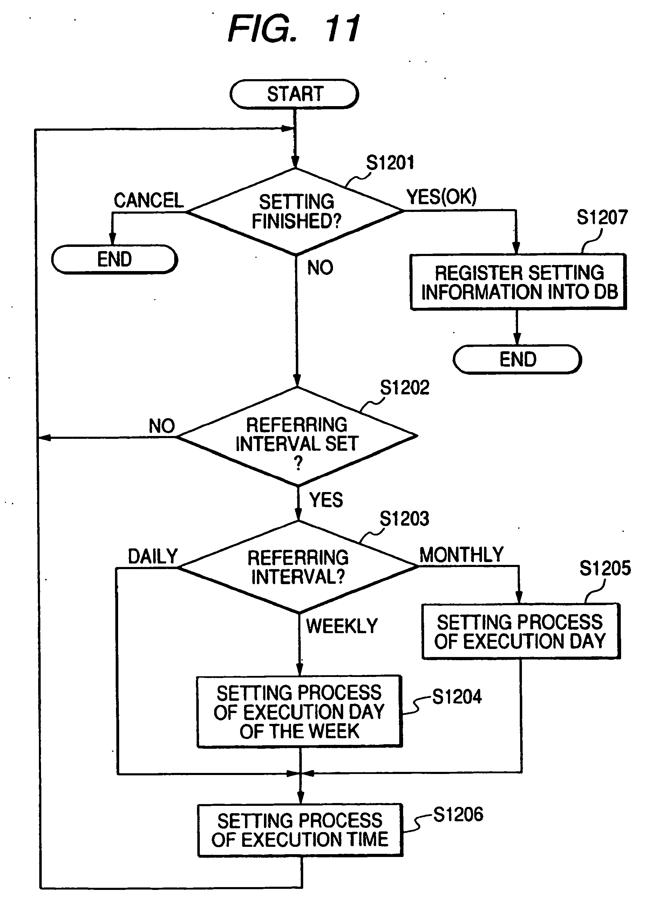

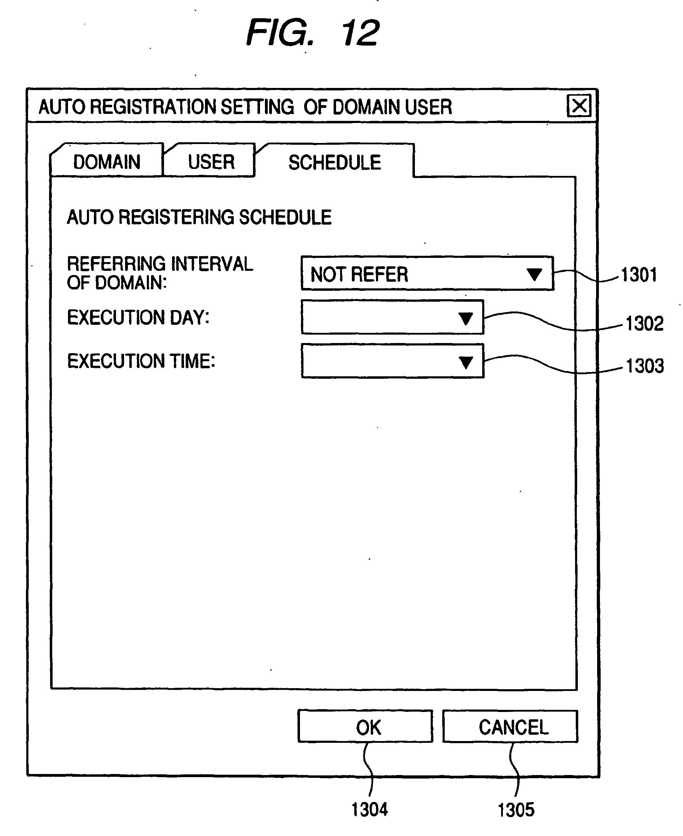

The setting method of periodically executing the automatic registration of the domain users will be described with reference to Figs. 11 and 12

Fig. 11 is a flowchart showing the process for setting time to execute the automatic registration of the domain user. Fig. 12 is a diagram showing an example of a GUI for allowing the CPU to execute the process in Fig. 11. The process in Fig. 11 is executed by the user information managing module 1031a in Fig. 1.

In Fig. 11, whether or not the setting is finished is discriminated in step S1201. If an OK button 1304 shown in Fig 12 has been clicked by the user (YES in step S1201), step S1207 follows. If a "cancel" button 1305 is clicked, the set information is not registered/stored and the processing routine is finished. In the other cases (NO in step S1201), step S1202 follows.

In step S1202, whether or not a referring interval at which the base server computer 1030 periodically refers to the domain has been set is discriminated. One of "not refer", "daily", "weekly", and "monthly" can be selected here from a dropdown list 1301 in Fig. 12. If the referring interval has been set as a result of the discrimination of step S1202 (YES in step S1202), the selected referring interval is discriminated (step S1203).

If "daily" is selected as a referring interval in step S1203, step S1206 follows. The process for setting the time of the execution of the automatic registration is executed and the processing routine is returned to step S1201. In step S1206, the execution time of a unit of one hour in a range from 0 to 23 o'clock can be set by a dropdown list 1303 in Fig. 12. If "weekly" is selected as a referring interval, a process for setting the day of the week of the execution is executed in step S1204 and step S1206 follows. In step S1204, an arbitrary day of the week in a range from Sunday to Saturday can be selected by a dropdown list 1302 in Fig. 12.

If "monthly" is selected as a referring interval in step S1203, a process for setting the execution day is executed in step S1205 and step S1206 follows. In step S1205, the execution day can be selected by the dropdown list 1302 in Fig. 12. Although the state where the day of the week of the execution and the execution day are displayed in the dropdown list 1302 is shown in the diagram, they can be also displayed by the independent dropdown lists.

Schedule information when the automatic registration of the domain users set in steps S1201 to S1206 is executed is registered and stored in the D/B 1090 in step S1207 and the processing routine is finished.

By the above processes, in the base server computer 1030, the time for executing the automatic registering process of the domain users can be set and the set information can be registered and stored in the database.

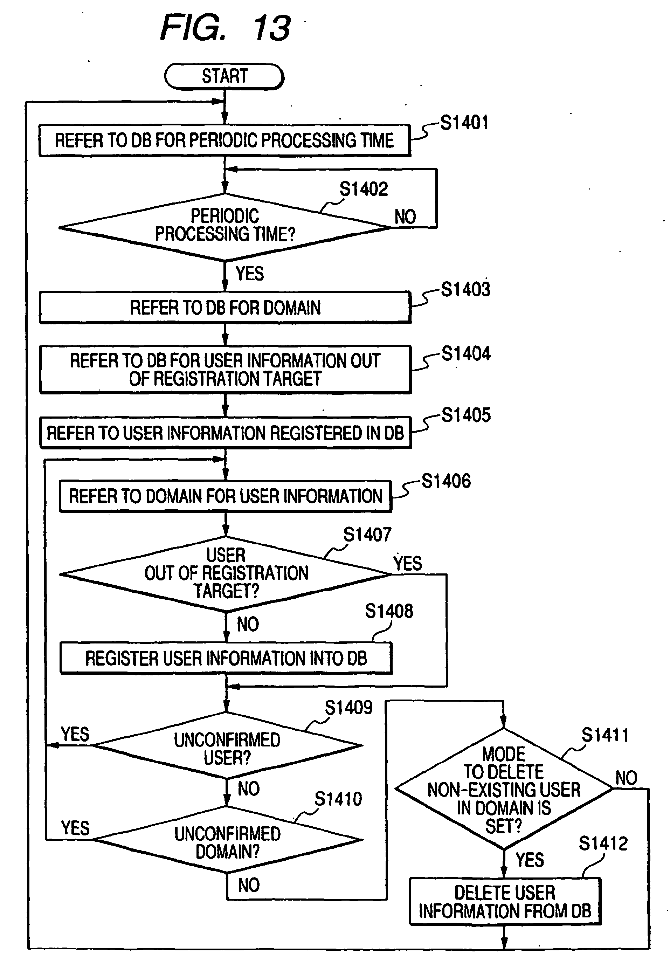

The registering and deleting processes of the domain users which are executed as periodic processes by the base server computer 1030 on the basis of the information regarding the automatic registration of the domain users set by the foregoing processes will now be described with reference to Fig. 13.

Fig. 13 is a flowchart showing the processes for automatically registering and deleting the domain users. The processes in Fig. 13 are executed by the user information managing module 1031a in Fig. 1.

In Fig. 13, first, the time for executing the periodic process (periodic processing time) is referred to from the information registered in the D/B 1090 in step S1401. In next step S1402, whether or not the time counted by the base server computer 1030 has reached the time to execute the periodic process is discriminated. If the count time does not reach the periodic processing time as a result of the discrimination of step S1402 (NO in step S1402), the counting process is repeated until it reaches the periodic processing time. If the count time has reached the periodic processing time (YES in step S1402), the information of the domain to refer to the user information is referred to from the information registered in the D/B 1090 in step S1403.

Subsequently, in step S1404, the user information out of the registration targets is referred to from the information registered in the D/B 1090. The user information registered in the D/B 1090 in the base server computer 1030 is referred to in step S1405. The user information is referred to from the domains as automatic registration targets in step S1406. Whether or not the user information which was referred to in step S1406 is out of the registration targets is discriminated in step S1407. If the user information is out of the registration targets as a result of the discrimination of step S1407 (YES in step S1407), step S1409 follows. If it is not out of the registration targets (NO in step S1407), the user information is registered into the D/B 1090 in the base server computer 1030 in step S1408.

Whether or not the unconfirmed user exists in the target domain is discriminated in step S1409. If the unconfirmed user exists (YES in step S1409), the processing routine is returned to step S1406. If no unconfirmed users exist (NO in step S1409), whether or not the unconfirmed domain exists is discriminated in step S1410.

If the unconfirmed domain exists as a result of the discrimination of step S1410 (YES in step S1410), the processing routine is returned to step S1406 and the user information regarding another domain is referred to. If no unconfirmed domains exist (NO in step S1410), whether or not the mode to delete the users who do not exist in the target domains but exist in the base server computer 1030 has been set is discriminated in step S1411.

If the mode not to delete the users existing in the base server computer 1030 has been set as a result of the discrimination of step S1411 (NO in step S1411), the processing routine is returned to step S1401 and the next periodic processing time is referred to. If the mode to delete the users existing in the base server computer 1030 has been set (YES in step S1411), the user information which exists in the user information referred to in step S1405 but does not exist in the user information referred to from the target domain is deleted from the D/B 1090 in step S1412 and the processing routine is returned to step S1401.

By the above processes, the synchronization of the user information managed by the domain and the user information managed by the job account system can be automatically performed.

According to the embodiments, when the user information managed by the domain of the operating system which has the reliable relation with the domain in which the base server computer 1030 exists is added or deleted, the information showing such a fact is immediately or periodically reflected to the user information of the job account system and the users unnecessary for the job account system are automatically excluded, so that only the necessary user information can be automatically registered and deleted. The ease of use in the user management in the job account system can be improved. The troublesomeness of the administrator can be reduced.

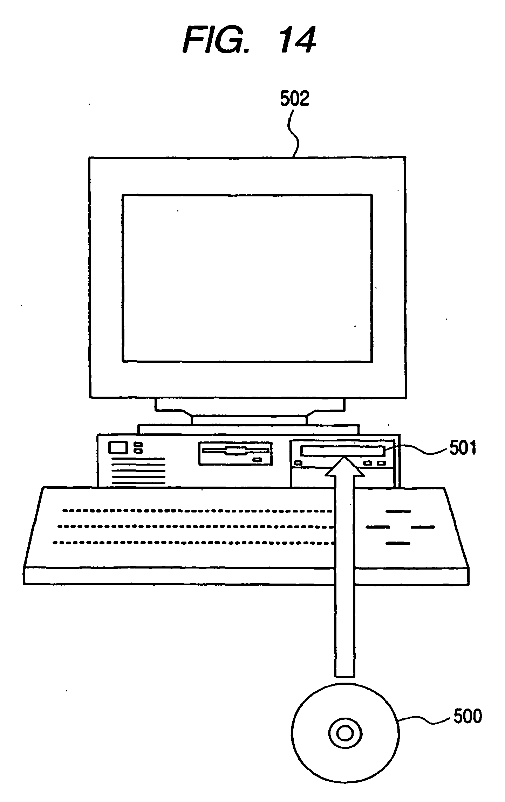

The objects of the invention are also accomplished by a method whereby the storing medium (Fig. 3) in which program codes of the software (control program) to realize the functions of the embodiments mentioned above have been recorded is supplied to the computer shown in Fig. 14 and the computer (CPU 201) reads out and executes the program codes stored in the storing medium.

As a method of supplying the programs and data shown in Fig. 3 to the computer, as shown in Fig. 14, a method whereby the program and the like are stored into a CD-ROM 500 and supplied to a computer main body 502 (through a CD-ROM drive 501) is generally used. In this case, the program codes themselves read out from the storing medium realize the foregoing embodiments and the storing medium in which the program codes have been stored constructs the invention.

The storing medium to supply the program codes is not limited to the CD-ROM or hard disk but it is also possible to use, for example, a floppy (registered trademark) disk, an optical disk, a magnetooptic disk, a CD-R, CD-RW, a DVD-ROM, a DVD-RAM, a DVD-RW, a DVD+RW, a magnetic tape, a non-volatile memory card, a ROM, or the like.

The invention incorporates not only the case where the computer executes the read-out program codes, so that the functions of the embodiments mentioned above are realized but also the case where the OS or the like which is operating on the computer executes a part or all of actual processes on the basis of instructions of the program codes, and the functions of the embodiments mentioned above are realized by those processes.

Further, naturally, the invention incorporates the case where the program codes read out from the storing medium are written into a memory provided for a function expanding board inserted in the computer or a function expanding unit connected to the computer, thereafter, a CPU or the like provided for the function expanding board or the function expanding unit executes a part or all of actual processes on the basis of instructions of the program codes, and the functions of the embodiments mentioned above are realized by those processes.

## Claims

1. A job managing apparatus (1030) for managing job information outputted from an information processing apparatus (1010, 1020) to a peripheral device (1040, 1050, 1060) on the basis of user information for managing jobs, **characterized by** comprising:
control means (1031a) for synchronizing user information belonging to another network managing group which has a reliable relation with a network managing group to which a plurality of network devices including said job managing apparatus belong, to the user information for managing the jobs which are managed by said job managing apparatus.

2. An apparatus according to claim 1, wherein said control means (1031a) has setting means for setting a network managing group to refer to said user information managed by said job managing apparatus from among said network managing groups.

3. An apparatus according to claim 2, wherein said setting means is operable to set the user information managed by said job managing apparatus which is not synchronized to said user information from said other network managing group..

4. An apparatus according to claim 2 or 3, wherein said setting means is operable to set a schedule for synchronising said user information from said other network managing group to said user information managed by said job managing apparatus.

5. An apparatus according to claim 4, wherein said control means comprises:
referring means for referring to said user information of the network managing group set from said network managing groups in accordance with said set schedule;
discriminating means for discriminating the user information which is not synchronized to the user information from said referred other network management group and
synchronizing means for synchronizing said discriminated user information from said other network managing group with said user information managed by said job managing apparatus.

6. An apparatus according to any one of claims 2 to 5, wherein said setting means is constructed by a user interface.

7. An apparatus according to claim 5, wherein said synchronizing means is operable to delete the user information existing in said job managing apparatus in accordance with a result of said synchronization.

8. An apparatus according to any one of claims 1 to 7, wherein said control means is operable to synchronize the user information belonging to said another network managing group to said user information managed by said job managing apparatus in response to a predetermined event including an input of an obtaining request from a timer or a user in said job managing apparatus.

9. A job managing method executed by a job managing apparatus (1030) for managing job information output from an information processing apparatus (1010, 1020) to a peripheral device (1040, 1050, 1060) on the basis of user information for managing jobs, **characterized by** comprising:
a control step of synchronizing user information belonging to another network managing group which has a reliable relation with a network managing group to which a plurality of network devices including said job managing apparatus belong, to the user information for managing the jobs managed by said job managing apparatus.

10. A method according to claim 9, wherein said control step has a setting step of setting a network managing group to refer to said user information managed by said job managing apparatus from among said network managing groups (S801 - S810).

11. A method according to claim 10, wherein in said setting step, the user information managed by said job management apparatus which is not synchronized to said user information from said other network managing group is set.

12. A method according to claim 10 or 11, wherein in said setting step, a schedule for synchronizing said user information from said other network managing group to said user information managed by said job managing apparatus is set.

13. A method according to claim 12, wherein said control step comprises:
a referring step of referring to said user information of the network managing group set from said network managing groups in accordance with said set schedule;
a discriminating step of discriminating the user information which is not synchronizes to the user information from said referred other network management group, and
a synchronizing step of synchronizing said discriminated user information from said other network managing group with said user information managed by said job managing apparatus.

14. A method according to claim 13, wherein in said synchronizing step, the user information existing in said job managing apparatus is deleted in accordance with a result of said synchronization.

15. A method according to any one of claims 9 to 14, wherein in said control step, the user information belonging to said other network managing group is synchronized to said user information managed by said job managing apparatus in response to a predetermined event including an obtaining request from a timer or a user in said job managing apparatus.

16. A program comprising instructions, which when executed on a computer, adapts the computer to perform the steps of the job managing method according to any one of claims 9 to 15.

17. A computer-readable storing medium which stores a program according to claim 16.

## Patentansprüche

1. Jobverwaltungsvorrichtung (1030) zum Verwalten von Jobinformation, die von einer Informationsverarbeitungsvorrichtung (1010, 1020) an ein Peripherie-Device (1040, 1050, 1060) ausgegeben wurde, auf der Grundlage von Benutzerinformation zur Verwaltung von Jobs,
**gekennzeichnet durch**:
eine Steuereinrichtung (1031 a) zum Synchronisieren von Benutzerinformation, die zu einer anderen Netzverwaltungsgruppe gehört, die eine zuverlässige Beziehung zu einer Netzverwaltungsgruppe aufweist, zu der mehrere Netz-Devices einschließlich der Jobverwaltungsvorrichtung gehören, mit der Benutzerinformation zum Verwalten der von der Jobverwaltungsvorrichtung verwalteten Jobs.

2. Vorrichtung nach Anspruch 1, wobei die Steuereinrichtung (1031 a) eine Einstelleinrichtung aufweist zum Einstellen einer Netzverwaltungsgruppe zum Verweisen auf die Benutzerinformation, die von der Jobverwaltungsvorrichtung verwaltet wird, unter den Netzverwaltungsgruppen.

3. Vorrichtung nach Anspruch 2, wobei die Einstelleinrichtung betreibbar ist zum Einstellen der von der Jobverwaltungsvorrichtung verwalteten Benutzerinformation, die nicht mit der Benutzerinformation von der anderen Netzverwaltungsgruppe synchronisiert ist.

4. Vorrichtung nach Anspruch 2 oder 3, wobei die Einstelleinrichtung betreibbar ist zum Einstellen eines Ablaufplans zum Synchronisieren der Benutzerinformation von der anderen Netzverwaltungsgruppe mit der von der Jobverwaltungsvorrichtung verwalteten Benutzerinformation.

5. Vorrichtung nach Anspruch 4, wobei die Steuereinrichtung umfasst:
eine Verweiseinrichtung zum Verweisen auf die Benutzerinformation der aus den Netzverwaltungsgruppen eingestellten Netzverwaltungsgruppe nach Maßgabe des eingestellten Ablaufplans;
eine Unterscheidungseinrichtung zum Unterscheiden der Benutzerinformation, die nicht mit der Benutzerinformation aus der verwiesenen anderen Netzverwaltungsgruppe synchronisiert ist, und
eine Synchronisiereinrichtung zum Synchronisieren der unterschiedenen Benutzerinformation aus der anderen Netzverwaltungsgruppe mit der von der Jobverwaltungsvorrichtung verwalteten Benutzerinformation.

6. Vorrichtung nach einem der Ansprüche 2 bis 5, wobei die Einstelleinrichtung durch eine Benutzerschnittstelle gebildet wird.

7. Vorrichtung nach Anspruch 5, wobei die Synchronisiereinrichtung betreibbar ist zum Löschen der Benutzerinformation, die in der Jobverwaltungsvorrichtung vorhanden ist, nach Maßgabe eines Ergebnisses der Synchronisierung.

8. Vorrichtung nach einem der Ansprüche 1 bis 7, wobei die Steuereinrichtung betreibbar ist zum Synchronisieren der zur anderen Netzverwaltungsgruppe gehörigen Benutzerinformation mit der von der Jobverwaltungsvorrichtung verwalteten Benutzerinformation ansprechend auf ein vorbestimmtes Ereignis, welches eine Eingabe einer Aufforderung von einem Timer oder einem Benutzer in der Jobverwaltungsvorrichtung einschließt.

9. Jobverwaltungsverfahren, welches von einer Jobverwaltungsvorrichtung (1030) zum Verwalten von Jobinformation ausgeführt wird, die von einer Informationsverarbeitungsvorrichtung (1010, 1020) an ein Peripherie-Device (1040, 1050, 1060) ausgegeben wurde, auf der Grundlage von Benutzerinformation zur Verwaltung von Jobs, **gekennzeichnet durch**:
einen Steuerschritt zum Synchronisieren von Benutzerinformation, die zu einer anderen Netzverwaltungsgruppe gehört, die eine zuverlässige Beziehung zu einer Netzverwaltungsgruppe aufweist, zu der mehrere Netz-Devices einschließlich der Jobverwaltungsvorrichtung gehören, mit der Benutzerinformation zum Verwalten der von der Jobverwaltungsvorrichtung verwalteten Jobs.

10. Verfahren nach Anspruch 9, wobei der Steuerschritt einen Einstellschritt aufweist zum Einstellen einer Netzverwaltungsgruppe zum Verweisen auf die Benutzerinformation, die von der Jobverwaltungsvorrichtung verwaltet wird, unter den Netzverwaltungsgruppen (S801-S810).

11. Verfahren nach Anspruch 10, wobei im Einstellschritt die von der Jobverwaltungsvorrichtung verwaltete Benutzerinformation, die nicht mit der Benutzerinformation von der anderen Netzverwaltungsgruppe synchronisiert ist, eingestellt wird.

12. Verfahren nach Anspruch 10 oder 11, wobei im Einstellschritt ein Ablaufplan zum Synchronisieren der Benutzerinformation aus der anderen Netzverwaltungsgruppe mit der von der Jobverwaltungsvorrichtung verwalteten Benutzerinformation eingestellt wird.

13. Verfahren nach Anspruch 12, wobei der Steuerschritt umfasst:
einen Verweisschritt zum Verweisen auf die Benutzerinformation der aus den Netzverwaltungsgruppen eingestellten Netzverwaltungsgruppe nach Maßgabe des eingestellten Ablaufplans;
einen Unterscheidungsschritt zum Unterscheiden der Benutzerinformation, die nicht mit der Benutzerinformation aus der verwiesenen anderen Netzverwaltungsgruppe synchronisiert ist; und
einen Synchronisierschritt zum Synchronisieren der unterschiedenen Benutzerinformation aus der anderen Netzverwaltungsgruppe mit der von der Jobverwaltungsvorrichtung verwalteten Benutzerinformation.

14. Verfahren nach Anspruch 13, wobei im Synchronisierschritt die in der Jobverwaltungsvorrichtung vorhandene Benutzerinformation nach Maßgabe eines Ergebnisses der Synchronisierung gelöscht wird.

15. Verfahren nach einem der Ansprüche 9 bis 14, wobei im Steuerschritt die zur anderen Netzverwaltungsgruppe gehörige Benutzerinformation mit der von der Jobverwaltungsvorrichtung verwalteten Benutzerinformation ansprechend auf ein vorbestimmtes Ereignis synchronisiert wird, welches eine Aufforderung von einem Timer oder einem Benutzer in der Jobverwaltungsvorrichtung einschließt.

16. Programm mit Befehlen, das bei Ausführung auf einem Computer den Computer dazu anpasst, die Schritte des Jobverwaltungsverfahrens nach einem der Ansprüche 9 bis 15 durchzuführen.

17. Computerlesbares Speichermedium, welches ein Programm nach Anspruch 16 speichert.

## Revendications

1. Appareil de gestion de travaux (1030), destiné à gérer des informations de travaux fournies par un appareil de traitement de l'information (1010, 1020) à un dispositif périphérique (1040, 1050, 1060), sur la base d'informations d'utilisateur destinées à la gestion des travaux, **caractérisé par** :
un moyen de commande (1031a), destiné à synchroniser des informations d'utilisateur, appartenant à un autre groupe de gestion de réseau qui possède une relation fiable avec un groupe de gestion de réseau auquel appartient une pluralité d'appareils de réseau, y compris ledit appareil de gestion de travaux, avec des informations d'utilisateur destinées à la gestion des travaux, qui sont gérées par ledit appareil de gestion de travaux.

2. Appareil selon la revendication 1, dans lequel ledit moyen de commande (1031a) comprend un moyen de paramétrage destiné à définir, parmi lesdits groupes de gestion de réseau, un groupe de gestion de réseau pour se rapporter auxdites informations d'utilisateur gérées par ledit appareil de gestion de travaux.

3. Appareil selon la revendication 2, dans lequel ledit moyen de paramétrage est en mesure de définir les informations d'utilisateur gérées par ledit appareil de gestion de travaux qui ne sont pas synchronisées avec lesdites informations d'utilisateur provenant dudit autre groupe de gestion de réseau.

4. Appareil selon la revendication 2 ou 3, dans lequel ledit moyen de paramétrage est en mesure de définir un calendrier pour la synchronisation desdites informations d'utilisateur provenant dudit autre groupe de gestion de réseau avec lesdites informations d'utilisateur gérées par ledit appareil de gestion de travaux.

5. Appareil selon la revendication 4, dans lequel ledit moyen de commande comprend :
un moyen de consultation, destiné à consulter lesdites informations d'utilisateur du groupe de gestion de réseau défini parmi lesdits groupes de gestion de réseau, conformément audit calendrier défini ;
un moyen d'identification, destiné à identifier les informations d'utilisateur qui ne sont pas synchronisées avec les informations d'utilisateur provenant dudit autre groupe de gestion de réseau consulté ; et
un moyen de synchronisation, destiné à synchroniser lesdites informations d'utilisateur identifiées provenant dudit autre groupe de gestion de réseau avec lesdites informations d'utilisateur gérées par ledit appareil de gestion de travaux.

6. Appareil selon l'une quelconque des revendications 2 à 5, dans lequel ledit moyen de paramétrage est construit par une interface utilisateur.

7. Appareil selon la revendication 5, dans lequel ledit moyen de synchronisation est en mesure de supprimer les informations d'utilisateur existant dans ledit appareil de gestion de travaux, sur la base d'un résultat de ladite synchronisation.

8. Appareil selon l'une quelconque des revendications 1 à 7, dans lequel ledit moyen de commande est en mesure de synchroniser les informations d'utilisateur appartenant audit autre groupe de gestion de réseau avec lesdites informations d'utilisateur gérées par ledit appareil de gestion de travaux en réponse à un événement prédéterminé comprenant une saisie d'une demande d'obtention, par un compteur de temps ou par un utilisateur sur ledit appareil de gestion de travaux.

9. Procédé de gestion de travaux exécuté par un appareil de gestion de travaux (1030), destiné à gérer des informations de travaux fournies par un appareil de traitement de l'information (1010, 1020) à un dispositif périphérique (1040, 1050, 1060), sur la base d'informations d'utilisateur destinées à la gestion des travaux, **caractérisé par** :
un étape de commande consistant à synchroniser des informations d'utilisateur, appartenant à un autre groupe de gestion de réseau qui possède une relation fiable avec un groupe de gestion de réseau auquel appartient une pluralité d'appareils de réseau, y compris ledit appareil de gestion de travaux, avec des informations d'utilisateur destinées à la gestion des travaux qui sont gérés par ledit appareil de gestion de travaux.

10. Procédé selon la revendication 9, dans lequel ladite étape de commande comprend une étape de paramétrage, consistant à définir, parmi lesdits groupes de gestion (S801-S810) de réseau, un groupe de gestion de réseau pour se rapporter auxdites informations d'utilisateur gérées par ledit appareil de gestion de travaux.

11. Procédé selon la revendication 10, dans lequel, dans ladite étape de paramétrage, les informations d'utilisateur gérées par ledit appareil de gestion de travaux qui ne sont pas synchronisées avec lesdites informations d'utilisateur provenant dudit autre groupe de gestion de réseau sont définies.

12. Procédé selon la revendication 10 ou 11, dans lequel, dans ladite étape de paramétrage, il est défini un calendrier de synchronisation desdites informations d'utilisateur provenant dudit autre groupe de gestion de réseau avec lesdites informations d'utilisateur générées par ledit appareil de gestion de travaux.

13. Procédé selon la revendication 12, dans lequel ladite étape de commande comprend :
une étape de consultation, consistant à consulter lesdites informations d'utilisateur du groupe de gestion de réseau défini parmi lesdits groupes de gestion de réseau, conformément audit calendrier défini ;
une étape d'identification, consistant à identifier les informations d'utilisateur qui ne sont pas synchronisées avec les informations d'utilisateur provenant dudit autre groupe de gestion de réseau consulté ; et
une étape de synchronisation, consistant à synchroniser lesdites informations d'utilisateur identifiées provenant dudit autre groupe de gestion de réseau avec lesdites informations d'utilisateur gérées par ledit appareil de gestion de travaux.

14. Procédé selon la revendication 13, dans lequel, dans ladite étape de synchronisation, les informations d'utilisateur qui existent dans ledit appareil de gestion de travaux sont supprimées sur la base d'un résultat de ladite synchronisation.

15. Procédé selon l'une quelconque des revendications 9 à 14, dans lequel, dans ladite étape de commande, les informations d'utilisateur appartenant audit autre groupe de gestion de réseau sont synchronisées avec lesdites informations d'utilisateur appartenant audit appareil de gestion de travaux en réponse à un événement prédéterminé comprenant une demande d'obtention, par un compteur de temps ou par un utilisateur sur ledit appareil de gestion de travaux.

16. Programme comprenant des instructions qui, lorsqu'elles sont exécutées sur un ordinateur, adaptent l'ordinateur afin d'exécuter les étapes du procédé de gestion de travaux selon l'une quelconque des revendications 9 à 15.

17. Support de stockage lisible par ordinateur, stockant un programme selon la revendication 16.
